# EUROPEAN PATENT APPLICATION

(11) **EP 3 219 625 A1**
(43) Date of publication of application: **20.09.2017**
(21) Application number: 16800867.0
(22) Date of filing: 12.01.2016
(51) Int. Cl.: B65B 5/04, B65B 25/02, B65B 25/06

(54) **POULTRY PACKAGING MACHINE**

(30) Priority: 11.01.2016 BR 102016000581
(71) Applicant: Abati, Camilo Pedro, CEP 89.595.000 Salto Beloso, Santa Catarina (BR)
(72) Inventor: Abati, Camilo Pedro, CEP 89.595.000 Salto Beloso, Santa Catarina (BR)
(74) Representative: Pereira Garcia, João Luís
(86) International application number: PCT/BR2016/000006
(87) International publication number: WO 2017/120648

(57) **Abstract**

PACKAGING MACHINE FOR FOWLS, for automatic packing of entire fowls or its parts, whose proposal is to provide packaging totally automated with inspiring configuration easy serviceable and operation, including an infeed belt (100) operated by motor reducer (102) controlled by a sensor system (101) which conducts the fowl to a mechanism with funnel (110) containing opening mechanism (113) of its point and providing, before the mouth funnel (110), a piston (111) axially aligned and which carries out a feed movement and retreat in relation to the funnel (110), pushing the fowl into the opened package arranged in a department store (130), whose package is open by a mechanism (120) of opening packages that contain forks (121) which progress and retreat towards the department store (130), and conducting package to a package module and (140) composed of carrousel pulled by operating element (142) containing at least three compartments (141) which receives the fowl into the opening package for a receipt (B) and sealing subsequently to a release position (C) of the package. The closing is done through closing module (150) assembled above an upper table (146); on this upper table (146) a sealing module (160) is also envisaged (160) and operating table (147) in order to adjust the fowl within the package, and the modules and its parts to be controlled by sensors and specific software programmed by the user in the Man Machine Interface MMI (11).

## Description

The present report describes a machine used for realizing the automated process of poultry packaging, entire, or in parts, such as chicken, turkey, chester, among others. Such machine carries out the whole process of packaging, including the poultry position within the packaging, its closing and sealing.

initially, the poultries packaging, such as chickens, entire, or its parts, was carried out manually by operators. This condition showed numerous drawbacks, such as low productivity, operator dependency, lesions due to repetitive strain of the operator, non-conformities, lack of operation regularity etc.

The American patent document US4141194, published on February 1979 revealed some improvements regarding the packaging fully manual of chickens, or parts of chickens; this document describes a machine which provides means for grasping the chicken along legs, a hopper for directing the chicken to an opening packaging, prepared at the lower part, and the packaging must be automatically positioned to receive chicken, and its previous closing. This document indicates a solution very primitive, but very important for the packaging fully manual previously known.

Another document must be mentioned, the German document DE2758289, published on June 1979, that also shows a dispositive for packing poultries and a configuration which provides better centralization of the poultry.

Another latest solution, already known, is described on the Brazilian document MU8700798-3 deposited on July 2007, in this provision, the chicken is overthrown of the production line directly on adequate funnel in the position to be packed, falling directly within the respective plastic packaging that shall be open, pressured by airstream, given that this packaging contains a perforated supporting tab, that gets stuck into the output nozzle of such funnel, in order to burst this perforation when the chicken falls of the upper part of the machine into the packaging, emphasizing it of the packaging refill, roller type, receiving an adequate seal, given that the machine is ready for receiving a new chicken that falls through the funnel.

On the basis of the referred documents, it shall be noticed that already exists a solution for packing poultries automatically, gaining productivity, through automatic feed packaging machine; improving subsequently the packaging stage through centralization and better position of the chicken within the packaging, as revealed by the German document; and on the Brazilian document, it appears that all machine improvements whose configuration provides set of hoppers that already allows to receive the chicken of the line production and directing it until the packaging remains open with the help of airstream.

The latest and technically feasible solution hitherto known in the current technical status is described on the Brazilian patent document MU8900365-9, and which was acquired by the inventor and depositor of the present report. This document shows a machine for packing chicken including all ideas of previous solutions that makes the process fully automated: from the poultry receipt to the closing and sealing of the package. This automation take into account the entire manufacturing process, such machine is composed of system for receiving the chicken from the freezer line, centralizing through set of funnels and cylinders, and supply packaging system at the lower part of this stock of funnels; this machine provides a carrousel system with distinctive chicken packaging, being a position for receiving chicken within the packaging, other position for the closing and sealing of the packaging and third positioning to discard the chicken which has been packed again for the line. The carrousel has an interlinked movement through clutch system containing chains which perform all their movement. Such machine, as described in this aforementioned, has revolutionized the chicken packaging system, or similar poultries, without having to complete any step by the operator.

A problem associated with this machine is the way to realize the chicken package process of such machine, closing and sealing package is very difficult. The chambers, established in the carrousel, realize two types of movement: one of transfer, which is the carousel rotation as a whole, that allows a change on the position of such chambers, for receiving chicken, closing and sealing of the package, and disposal of the packaged chicken, and another rotation movement around the own compartment axis: this rotation movement that allows to realize closing and sealing of the packaging. It is provided in each compartment a fixing package system, containing clamps which open and close by pneumatic control, and by closing, the chamber turn performing the closing of the packaging and the guide for the sealing mechanism, which contains a blowing system, with a cotter shear pin to remove the edge package, the surplus, which is located on the clamp. All the movement was realized by a mechanism containing clutch interconnected by chain.

As indicated with the brief explanation above, the way to closing and sealing package with this machine is very difficult; requires a series of mechanism, in each compartment which receives poultry including the mechanism for securing the package, pneumatic controls, the rotation of each chamber, the mechanism which is provided in each chamber for moving the packaging to the sealing system etc., in addition to the mechanism containing clutch and chains for the execution of the entire assembly movement. This undertaken configuration causes several problems such as many stops during setup and maintenance of the chains, clutches; the possibility of breakdown and imbalances are higher, and any clamp breakdown of a compartment or any other piece could affect the entire machine; it is required a huge quantity of sensors to control each step to be carried out for each compartment. Another problem is linked to the surplus of CUT package, once this surplus has no destination, that is to say, when they are CUT, these will fall on the machine causing series of drawbacks, such as residues accumulation within the machine, dirt, etc.

In order to seize all knowledge and technical information available, such as market necessities, it was sought to develop a machine for packaging poultries enjoying all advantages of other solutions as revealed previously, document contents of the aforementioned patents, and with the purpose to automate entirely, however, solving issues contained and not solved by current technical status, including particularly the last machine as referred above, offering a solution that takes into account the entire necessity produced by the market.

The developed machine, object of the present report, presents a machine for packaging poultries, such as chicken, turkey, chester, among others or any part thereof, and fulfilling all the process, from receiving and packing chicken, to closing and sealing package, and discarding chicken packed again for the line. Such machine was developed for being more simplified construction equipment, with higher performance, in the face of presented anteriority. The machine purpose is to provide an innovative shape for the entire process of poultry packaging, eliminating the problem of cropped remains from the packages; the problem of interconnected mechanism through chain which generated a great adjustment and production downtime; the problem of carousel configuration containing the compartments with mechanisms in each chamber, generating equipment complexity, numerous pieces, etc.

The machine, object of the present patent request, in this projects, aims to present a new solution in front of all previous solving problems aforementioned. Such machine includes belt for receiving poultry; mechanism with funnel and fitting piston with power system for packages, with package opening with the aid of slipstream; such machine provides an exclusive and constructive configuration that includes a packaging module and poultry movement, including carrousel with packaging chamber for chicken; closing package module, composed by a device which contains rotating tweezers, lifting and decease means, suction accomplishment among other controls; a sealing module, mounted on a bench or table, including device with a specific mechanism for sealing the package; and a position to liberate chicken dumping it within output conveyor.

The machine is controlled by CLP which manages and activates automatically, through pneumatic pistons, each of the modules and devices, with the AID of sensors mounted on specific points of the machine and controlled by the operator through IHM (Man Machine Interface).

The machine presented here, solves all problems as yet unresolved with the technique status, being some of these mains aforementioned in this report.

The forms as described in attachment, along with a detailed description subsequently, as example and illustration of the developed machine materialization, will supply a better understanding of the packaging machine, object of the present report.

The illustration shows in perspective the machine overview, object of the present request.

The illustration 2 describes in perspective the machine by highlighting some details, and the man machine interface, which allows the entire control of the equipment by the operator.

The illustration 3 illustrates in perspective the machine internal part, with its modules responsible for the accomplishment of packaging process.

The illustration 4 illustrates an overview of the machine internal part and its main modules.

The picture 5 shows the machine infeed belt.

The figure 6 describes the whole through funnel responsible for directing chicken into the package.

The figure 7 shows the fork movement, responsible for opening package.

The figure 8 describes the store department that provides packages.

The illustration 9 shows the packaging module of the machine.

The image 10 exemplifies in perspective the establishment of the packaging, closing and sealing module.

The figures 11 and 12 illustrate the closing package module.

The image 13 shows a bench o upper table where is mounted the sealing module and, moreover, it shows a position for the pack discharge, as closed and sealed.

The illustration 14 describes the sealing module, part of the machine which is mounted on upper table.

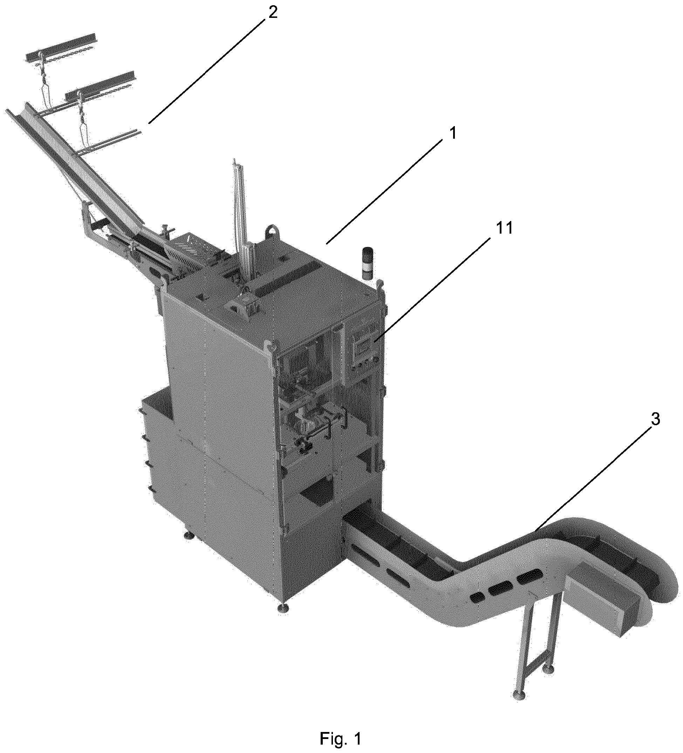

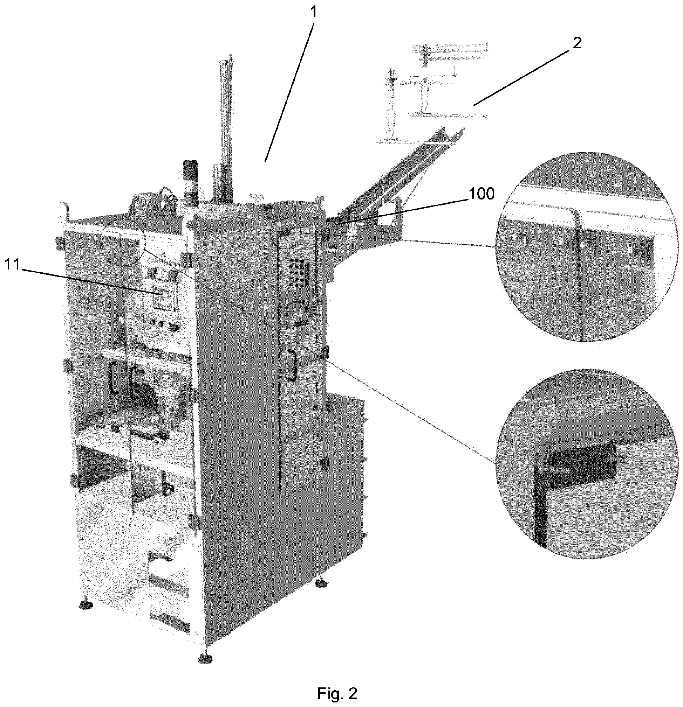

In reference to the pictures presented, in accordance with the figures 1 and 2, the machine (1) is planned in order to install it on a production line, receiving poultries from a conveyor belt (2), processing all packaging and sealing stages of the poultry and liberating the poultry, packed by other output conveyor (3). Such machine (1) is fully automated, controlled by sensors and MMI (11) through specific software. All pneumatic system may operate from the industrial installation or through own system. This has a structure to provide shelter to the components that compose the equipment, in order to be protected in the internal part. The structure is composed of doors, preferably transparent in order to visualize its operation, along with panels for performing control of the aforementioned.

In accordance with the figures 2, 3 and 4 such machine (1) includes a feeding conveyor (100) that receives the bird from poultry (2) of the production line; a set of funnel (110) for directing poultry to a packaging module (140) and poultry movement, which is carrousel with chamber (141) for packaging chicken, or other poultry, parts thereof; functioning with the set of funnel (110) operates a mechanism (120) to open package and a department store (130) to supply package

The packaging module (140) is pulled by driving element (142) and realizes rotation movement by step, enabling the compartment (141) to advance from a closing and sealing position and subsequently to a package liberation position; the compartment (141) is simple, easy to maintain, without big mechanical devices.

Furthermore, such machine (1) provides a closing module (150), containing lower extremity (151) responsible for closing package which contains poultry inside; provides a sealing module (160) of the package. After the sealing, the compartment module (140) turns another step and places chicken, already packed, in the part of package liberation for an output conveyor (3).

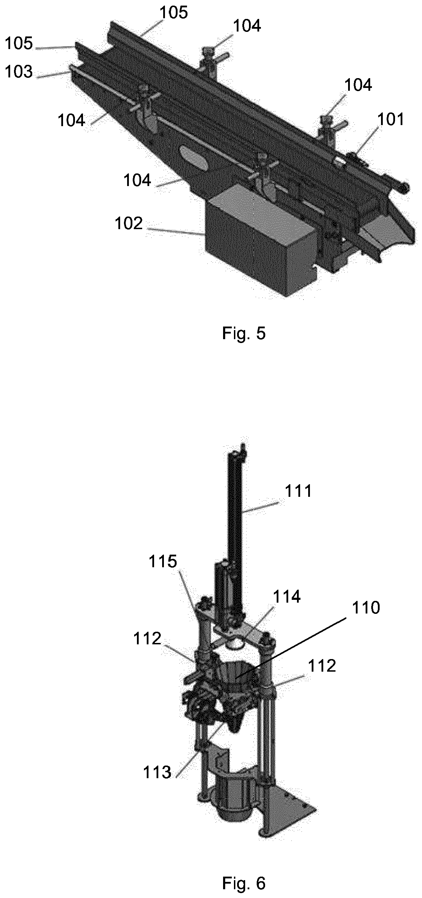

The arrival of chickens and its parts of the equipment occurs through the feeding conveyor (100) which receives poultry possibly from the assembly line conveyor (2); the feeding conveyor (100) is responsible for directing chickens to be packed; they are positioned along the feeding conveyor (100). As described on the figure 5, the feeding conveyor (100) is moved by motor reducer (102), controlled through sensors (101), that controls the conveyor movement for processing chicken within the machine. The conveyor must have cleaning pipes (103) with guides' governor with spraying nozzles (104), that remit to the cleaning process at both sides of feeding conveyor (100). These spraying nozzles (104), in times of operation, with its jet which are directed straight down, preventing the vacuumed water to the upper part of the conveyor and thus wetting the machine outskirts. The feeding conveyor (100) has side guides (105) in order to position them for enhancing the chicken packaging on the conveyor (100).

After passing by the feeding conveyor (100), the poultry, for example, the chicken and / or its parts, falling in the set of funnel (110), by which goes down until the package; the funnel (110) has angulations and geometrical shapes considered as compatible to allow such poultry displacement until the package. The set of funnel (110) provides, before the funnel mouth (110), a piston in line (111) centralized with the funnel axis (110) that performs forward and retreat movement established in the store department (130), this package is open though opening mechanism (120), positioned in face of department store (130), containing forks (121) which advance and retreat towards store department (130), by opening package with the aid of slipstream (131) established in the store department (130). Furthermore, the poultry is pushed into the chamber (141) of packaging module (140) to continue the process.

The picture 6 shows in detail this set of funnel (110), which contains funnel (110) with opening mechanism (113), that allows to open its tip for passing the chicken; a piston (111), which is established before the funnel mouth (110), with extremity in line (114) centralized with the funnel axis (110) that advances and retreats in relation to the chamber (141) with the aid of guides (112), pushing the chicken until the compartment (141) of packaging module (140). Such funnel package (110) contains a quick change (115) to facilitate the removal for cleaning, as well as auxiliary accessories which help in this process, including in the process of funnel locking (110) into the equipment in itself. The guides (112) are self-lubricants.

The image 4 shows that, between the funnel (110) and the packaging module, (140) an opening mechanism is provided (120) for packages and a department store (130) positioned in front of the mechanism (120).

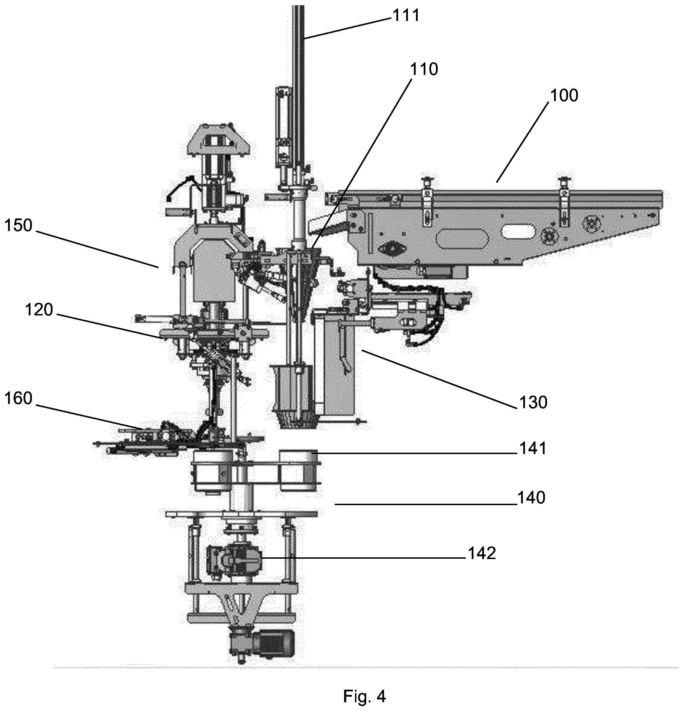

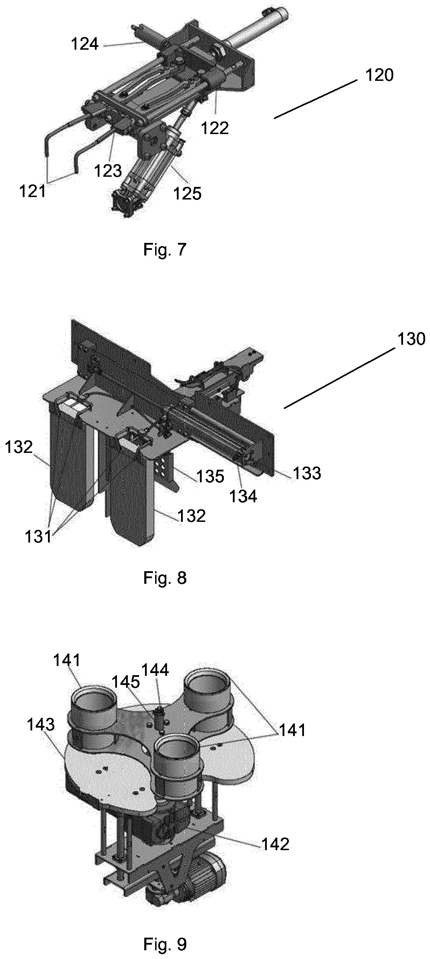

The figures 7 and 8 describe in details the opening mechanism (120) of packages and department store (130) containing packages as illustrated in its condition as showed on figure 4. These mechanisms (120) have forks (121) that advance and retreats with the task of opening pack established in the department store (130) positioned straight ahead, in order to receive chicken; the process is realized with the aid of blowing (131) that blows on the upper part of the packaging, allowing two forks (121) to open the top of the package for inserting children. Moreover, the mechanism (120) includes horizontal guides (122), that make its way horizontally, allowing the package opening. The forks (121) in its return are guided internally due to the cutting design of the guide (123) in its own body, that it may be closed in return. Its adjustment is extremely important for the equipment performance. Such setting mechanism (120) provides sensor (124) to identify the opening of the package, freeing the process frequency. The advance and setback may be done through piston (125).

The department store (130) has the function to store packing and make the Exchange when necessary. Following one of the chambers (132) that drains its charge, other supplies the machine and the collaborator can replenish the same without stops. Its package capacity may vary according to the range to be packed. This provides a cylinder (133) that positions the same through the signal emission issued by the sensor (134). In the department store (130), the press package (135) and blowing (131), used for opening the package. The press package (135) aims to pack at the time of package marking and lock in the position until it is supplied, besides guiding the press package (135) during its use

In this condition, by passing through the set of hopper (110), being allocated within the package, the chicken is directed inside the compartment (141) of the packaging module (140) of the machine as described in detail on figure 9. These compartments (141) may provide balances, controlled by MMI (11) to check the weight range of the chicken to be packed.

the packaging module (140) is moved through a step, proceeding the process step, which allows to advance the chamber (141), as described below the set of funnel (110), to a closing and sealing position and the chamber (141) that was in the closing and sealing position to liberate the package, which is already closed. A motor reducer (142), with the attached braking system that helps in the positioning of the same, realizes this function. This motor reducer (142) is mounted on the machine structure, preferably at the bottom and its position is conducted by sensor (144); the carrousel that contains the compartments (141) turn around a spindle (145). Such packaging module (140) provides a lower table (143) which has height adjustment in relation to the axis (145), in order to limit the distance from the carrousel and the chambers (141) to the height range which will be packed. The adjustment is provided through motor reducer (142) that regulates the height in accordance with the control which is submitted.

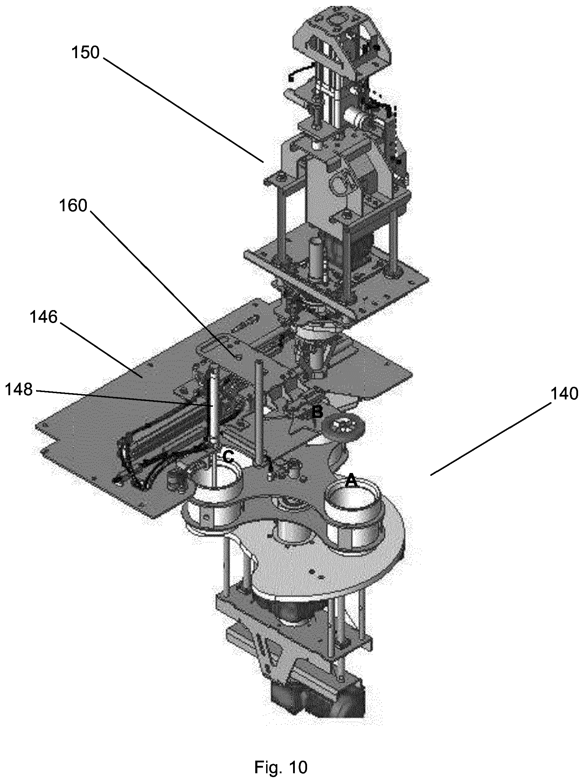

The figure 10 describes the disposition of equipment modules; and shows three carrousel of positions of packaging module (140): (A) the chicken receipt from the funnel, (B) the position that occurs an action of closing module (150) and the sealing module (160); and the position (C) where the same is ready and is expelled of the process, already packed and ready for the package. Furthermore, the carrousel may consist of variation, where the same movement in accordance with the desired degree, due to the lower table (143) providing the rotation movement, that can vary its position completely.

The packaging module (140) is positioned under the upper table (146) that compose the equipment; is in this upper table (146) which is intended the sealing module (160), a guidance table (147) for adjusting chicken, corresponding to the position (B) of the carrousel compartment (141) and the mechanism (148) to release the package established in the position (C) of the carrousel compartment (141).

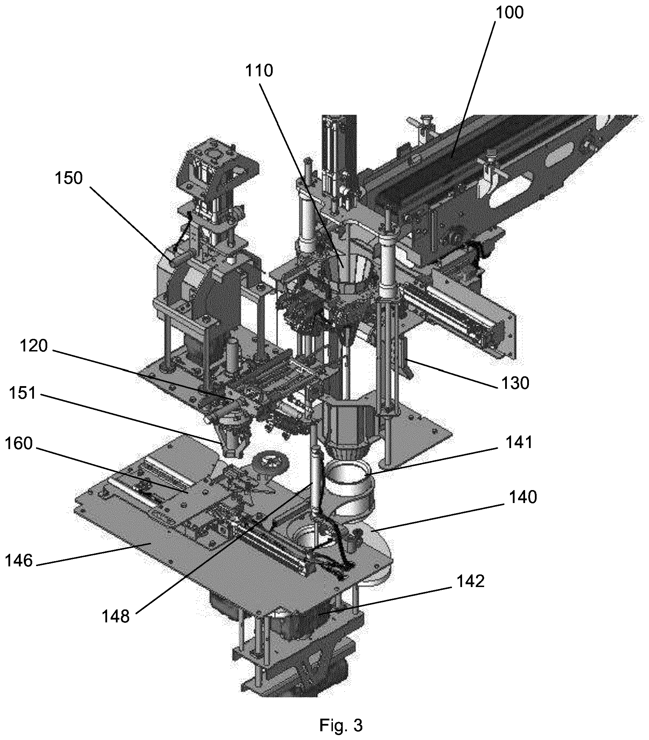

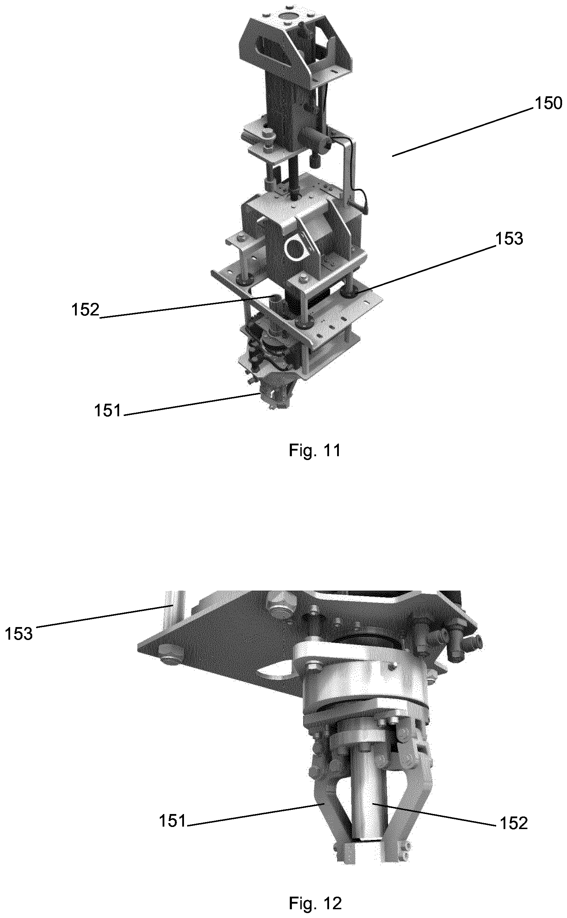

As indicated by the figure 10, as well as the figure 3, on the upper table (146), aligned vertically to the position (B), is disposed the closing module (150), consisting of a fundamental part of the equipment. Such closing module (150) is detailed on the figures 11 and 12. This has a construction with mechanism (153) for advance and retreat displacement in relation to the upper table (146) and a lower extremity (151) having the means for holding the packaging tip and rotating around the axis (152); this axis (152) is hollowed and a suction pipe is interlocked and linked to a vacuum pump. The package extremity enters internally on the axis (152) by its lower edge because of the performed suction. The lower extremity (151) has means, such as tweezers, for holding the package tip internally positioned to the axis (152); and by securing it, it realizes rotation movement for making torsion of the packaging edge to be closed and thus, to be sealed by the sealing module (160).

The operation of the closing module (150), as the advancing module, the suction triggering for directing the package extremity inside the axis (152), as well as securing the packaging edge by the lower extremity (151), its rotation and setback, is mandatorily performed in synchronism with the upper table (146) and with the carrousel movement of the packaging module (140); all is controlled by sensors and specific software programmed by the user through the MMI (11). The number of rotation, as well as the distance of rising and decline vertical displacement to be accomplished by the lower extremity (151) of the closing module (150) can also be regulated. The figure 12 shows in detail the lower extremity (151) of the closing module (150). It is very important that this lower extremity (151) has its correct position, as well as the number of rotations more adequate for each sealing situation.

The image 13 shows that, in the lower table (146), on position (B), where the carrousel places the chamber (141), vertically aligned for triggering the closing module (150), the board guide is provided (147) for adjustment, the board guide (147) is important for not being shank breach, after the suction and the closing package 150).

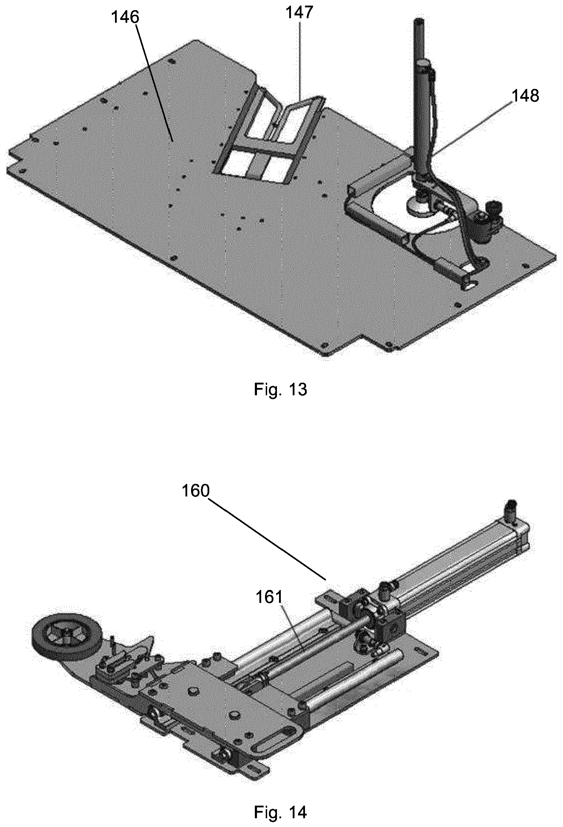

The sealing module (160), as described on the images 3 and 10, and separately on figure 14, is a machine component, mounted on the lower table (146), contains drive cylinder (161) that regulates its speed and guarantees the damping, dictating the operation pace of the same and performing sealing, cutting simultaneously the packaging excess. The cut-off part is removed by the suction pipe interlocked to the axis (152) of the closing module (150).

The last step, about carrousel movement, places the compartment (141) for the position (C) of package liberation, already closed and sealed. In this position, on the upper table (146) a mechanism is provided (148), ideally a cylinder, arranged as to push the poultry which is already packed, to an output conveyor (3) to be removed from the machine.

## Claims

1. "PACKAGING MACHINE FOR FOWLS", for automatic packing of entire fowls or its parts, characterized to include the infeed belt (100) operated by motor reducer (102) controlled by a sensor system (101) which conducts the fowl to a mechanism with funnel (110) containing opening mechanism (113) of its point and providing, before the mouth funnel (110), a piston (111) axially aligned and which carries out a feed movement and retreat in relation to the funnel (110), through guides (115), pushing the fowl into the opened package arranged in a department store (130), whose package is open by a mechanism (120) of opening packages that contain forks (121) which progress and retreat towards the department store (130), containing this press package (135) and blowing machine (131), and such mechanism (120) positioned in face of the department store (130), prepared after the funnel point (110), and a packaging module (140) composed of carrousel containing at least three compartments (141), get the poultry within the package, being such module pulled by operating element (142) and performs rotating movement, so that the compartment (141) progresses from a receipt position (A) of the fowl within the opening package for a closing position (B) and sealing and release position (C) of the package; and predicting an upper table (146), positioned above the closing module (140) and in this upper table (146), a sealing module is provided (160), an operating table (147) for adjusting the fowl within the package, corresponding to the position (B) of chamber placement (141) of the carrousel and a mechanism (148) for releasing the package provided on the position (C) of chamber placement (141) of the carrousel; on the upper table (146), vertically aligned to the position (B), a closing module is provided (150) containing mechanism (153) for progress and retreat movement in relation to the upper table (146) and a lower extremity (151) with the facilities for holding the packaging tip and rotating about an axis (152); and on the upper table (146) for assembling a sealing module (160) with the operating cylinder (161) with speed regulation and stoppage of packaging excess; and the modules and its parts must be controlled by sensors and a specific software programmed by the user in the Man Machine Interface MMI (11).

2. " PACKAGING MACHINE FOR FOWLS ", according to the claim 1 **characterized by** the infeed belt (100) possessing cleaning pipes (103) with regulator of operations with spraying nozzles (104), and lateral guides (105).

3. " PACKAGING MACHINE FOR FOWLS ", in accordance with the claim 2 **characterized by** spraying nozzles (104), its jets are directed straight down once in operation.

4. " PACKAGING MACHINE FOR FOWLS ", in accordance with the claim 1, **characterized by** the funnel (110) preventing opening mechanism (113), of its tip and rapid exchange system (115) and the guides (112) being self lubricating.

5. " PACKAGING MACHINE FOR FOWLS ", according to the claim 1, **characterized by** the opening mechanism (120) possessing yokes (121) displaced by horizontal guides (122), with return internally guided because to the guide cut-off (123), so that for the return to be stored.

6. " PACKAGING MACHINE FOR FOWLS ", according to the claim 5 **characterized by** the advance and retreat operation of mechanism (120) ser feito may be done through piston (125).

7. " PACKAGING MACHINE FOR FOWLS ", according to the claim 5, **characterized by** the opening packages identification to be done through sensor (124) established on mechanism (120).

8. " PACKAGING MACHINE FOR FOWLS ", according to the claim 1, **characterized by** the store department (130) containing displaceable compartments (132) for packaging, preventing the blowing (131) in the upper part of each compartment and through cylinder (133) that places likewise through a signal emission emitted by a sensor (134).

9. " PACKAGING MACHINE FOR FOWLS AVES", in accordance with the claim 1, **characterized by** the packaging module (140) which includes carrousel containing chambers (141) placed under the upper part (146), making up the equipment, moved through motor reducer(142) with braking system combined with a position obtain through sensor (144) turning around a spindle (145); and preventing a lower table (143) which contains height adjustment in relation to the axis (145), so that it is delimited to the distance equivalent to the carrousel with the compartments (141) for weight range that will be pack.

10. " PACKAGING MACHINE FOR FOWLS ", in accordance with the claim 1 **characterized by** the axis (152) of the closing module (150) which may be hollowed and this is engaged with an intake pipe linked to a vacuum pump.

11. " PACKAGING MACHINE FOR FOWLS ", in accordance with the claim 1, **characterized by** the lower extremity (151) for attaching the packaging tip with clamps.

12. " PACKAGING MACHINE FOR FOWLS AVES", in accordance with the claim 1, **characterized by** the suction operation for the extremity orientation of the package within the axis (152), as well as tying the packaging tip through lower extremity (151), its rotation and advance in relation to the upper table (146) which is accomplished in synchronism through the upper table (146) and the carrousel movement of the packaging module (140) controlled by sensors and specific software programmed by the user into the Man Machine Interface MMI (11).

13. " PACKAGING MACHINE FOR FOWLS ", according to the claim 1, **characterized by** the rotation number of the lower extremity (151) of the closing module (150) and its position must be adjusted and controlled by a specific software.

14. " PACKAGING MACHINE FOR FOWLS ", in accordance with the claim 1, **characterized by** the upper table (146) providing mechanism (148), for pushing the fowl (141) of the position (C) from out of the machine.
